# EUROPEAN PATENT APPLICATION

(11) **EP 4 761 253 A1**
(43) Date of publication of application: **17.06.2026**
(21) Application number: 23949206.9
(22) Date of filing: 17.08.2023
(51) Int. Cl.: H04N 21/443, H04N 21/426, H04N 21/438, H04N 21/485, H04N 21/442

(54) **IMAGE DISPLAY DEVICE AND OPERATING METHOD THEREOF**

(71) Applicant: LG ELECTRONICS INC., Yeongdeungpo-gu Seoul 07336 (KR)
(72) Inventor: KIM, Donghyun, Seoul 06772 (KR)
(74) Representative: Schott, Jakob Valentin
(86) International application number: PCT/KR2023/012173
(87) International publication number: WO 2025/037659

(57) **Abstract**

The present disclosure relates to an image display device and an operating method thereof. An image display device according to an embodiment of the present disclosure includes: a broadcast receiving unit including a tuner for receiving a broadcast signal; a display; and a control unit communicating with the tuner, wherein the control unit may check a use mode related to the use of the tuner, on the basis of power-on of the image display device, activate a function related to a broadcast service on the basis of the use mode being set to a first mode of using the tuner, and deactivate the function related to the broadcast service on the basis of the use mode being set to a second mode of limiting the use of the tuner. Various other embodiments are possible.

## Description

### [Technical Field]

The present disclosure relates to an image display device and an operating method thereof.

### [Background Art]

An image display device s is a device having a function of displaying images which a user can view. For example, the image display device may include a Television (TV), a monitor, a notebook computer, etc., having a liquid crystal display (LCD) using liquid crystal or an organic light emitting diode (hereinafter, referred to as OLED) display using the OLED.

The image display device having a tuner displays, through the tuner, an image corresponding to a signal of a broadcast channel selected by the user among broadcast signals transmitted from a broadcasting station. As in prior art 1 (Korean Patent Unexamined Publication No. 10-2016-0021538), the image display device that receives the broadcast signal through the tuner described above may receive the broadcast signal wirelessly through an antenna or may receive the broadcast signal through a cable by wire.

Meanwhile, when the image display device having the tuner is powered on, the image display device checks a state of the tuner to determine whether normal operation is possible. In this case, when the state of the tuner is defective, for example, when there is a problem with a substrate on which the tuner is disposed, when a terminal of the tuner is damaged, or when a radio frequency integrated circuit (RFIC) of the tuner is defective, booting of the image display device becomes impossible or a time delay occurs until booting is completed. As a result, there is a problem that the user cannot normally use other functions of the image display device except for functions related to a broadcast service, even though states of other components except for the tuner are normal.

### [Disclosure]

### [Technical Problem]

In view of the above, an object of the present disclosure is to solve the above-described problems and other problems.

Another object is to provide an image display device and an operating method thereof which may determine whether to activate functions related to broadcast services according to a preset mode in relation to the use of a tuner during booting.

Yet another object is to provide an image display device and an operating method thereof which may switch a mode related to the use of the tuner according to a state of the tuner.

Still yet another object is to provide an image display device and an operating method thereof which may provide a user interface for setting the mode related to the use of the tuner to a user.

Still yet another object is to provide an image display device and an operating method thereof which may provide an optimized user interface to the user according to setting of the mode related to the use of the tuner.

### [Technical Solution]

In order to achieve the object, an image display device according to an embodiment of the present disclosure includes: a broadcast receiving unit including a tuner for receiving a broadcast signal; a display; a control unit communicating with the tuner, and the control unit may check a use mode related to the use of the tuner based on power-on of the image display device, activate a function related to a broadcast service based on the use mode being set to a first mode of using the tuner, and deactivate the function related to the broadcast service based on the use mode being set to a second mode of limiting the use of the tuner.

In order to achieve the object, an operating method of an image display device according to an embodiment of the present disclosure may include: an operation of checking a use mode related to the use of a tuner for receiving a broadcast signal based on power-on of the image display device; an operation of activating a function related to the broadcast service based on the use mode being set to a first mode of using the tuner; and an operation of deactivating the function related to the broadcast service based on the use mode being set to a second mode of limiting the use of the tuner.

### [Advantageous Effects]

Effects of the display device and the operating method thereof according to the present disclosure are described as follows.

According to at least one embodiment of the present disclosure, whether to activate a function related to a broadcast service can be determined according to a preset mode related to the use of a tuner during booting.

According to at least one embodiment of the present disclosure, the mode related to the use of the tuner can be switched according to a state of the tuner.

According to at least one embodiment of the present disclosure, a user interface for setting the mode related to the use of the tuner can be provided to the user.

According to at least one embodiment of the present disclosure, an optimized user interface can be provided to the user according to setting the mode related to the use of the tuner.

An additional range of an applicability of the present disclosure will be apparent from the following detailed description. However, since various changes and modifications can be clearly appreciated by those skilled in the art within the spirit and the scope of the present disclosure, the detailed description and a specific embodiment such as a preferred embodiment of the present disclosure should be appreciated as being just given as an example.

### [Description of Drawings]

FIG. 1 is a diagram illustrating an image display system according to an embodiment of the present disclosure.
FIG. 2 is an internal block diagram of an image display device of FIG. 1.
FIG. 3 is an internal block diagram of a control unit of FIG. 2.
FIG. 4 is a diagram illustrating a control method of a remote control device of FIG. 2.
FIGS. 5a and 5b are flowcharts for an operating method of an image display device according to an embodiment of the present disclosure.
FIGS. 6 to 13 are diagrams referenced to for describing an operation of the image display device according to an embodiment of the present disclosure.

### [Mode for Invention]

Hereinafter, the present disclosure will be described in detail with reference to drawings. In the drawings, in order to clearly and briefly describe the present disclosure, illustration of a part which is not related to the description is omitted, and throughout the present disclosure, the same or extremely similar part is denoted by the same reference numeral.

Suffixes "module" and "unit" for components used in the following description are given in consideration of easy preparation of the specification only and do not have their own particularly important meanings or roles. Accordingly, the "module" and "unit" may be used interchangeably.

In the present application, it should be understood that term "include" or "have"indicates that a feature, a number, a step, an operation, a component, a part or the combination thereof described in the specification is present, but does not exclude a possibility of presence or addition of one or more other features, numbers, steps, operations, components, parts or combinations thereof, in advance.

Further, in the present disclosure, the terms such as first, second, etc., may be used for describing various components, but the components are not limited by the terms. The terms are used for distinguishing one component from another component.

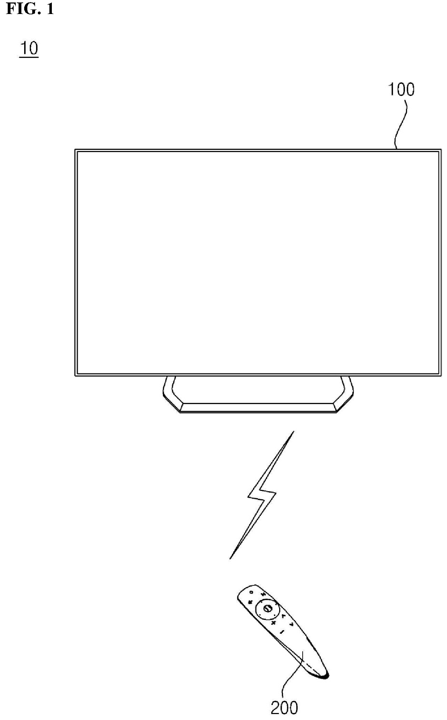

FIG. 1 is a diagram illustrating an image display system according to various embodiments of the present disclosure.

Referring to FIG. 1, the image display system 10 may include an image display device 100 and/or a remote control device 200.

The image display device 100 may be a device that processes and outputs an image. The image display device 100 is not particularly limited as long as the image display device 100 may output a screen corresponding to an image signal, such as a TV, a notebook computer, a monitor, or the like.

The image display device 100 may receive a broadcast signal, perform signal processing of the received broadcast signal, and output a signal-processed broadcast image. When the image display device 100 receives the broadcast signal, the image display device 100 may correspond to a broadcast receiving device.

The image display device 100 may receive the broadcast signal wirelessly through an antenna, and may receive the broadcast signal through a cable by wire. For example, the image display device 100 may receive a terrestrial broadcast signal, a satellite broadcast signal, a cable broadcast signal, an Internet Protocol Television (IPTV) broadcast signal, and the like.

The remote control device 200 may be connected to the image display device 100 by wire and/or wirelessly, and may provide various control signals to the image display device 100. In this case, the remote control device 200 may include a device that establishes a wired or wireless network with the image display device 100, and through the established network, transmits various control signals to the image display device 100 or receives signals related to various operations processed by the image display device 100 from the image display device 100.

For example, various input devices such as a mouse, a keyboard, a spatial remote controller, a trackball, a joystick, and the like may be used as the remote control device 200. The remote control device 200 may be referred to as an external device, and it is noted in advance that hereinafter, the external device and the remote control device may be used interchangeably as necessary.

The image display device 100 may be connected to only a single remote control device 200, or may be simultaneously connected to two or more remote control devices 200, and may change an object displayed on a screen or adjust a state of the screen based on a control signal provided from each remote control device 200.

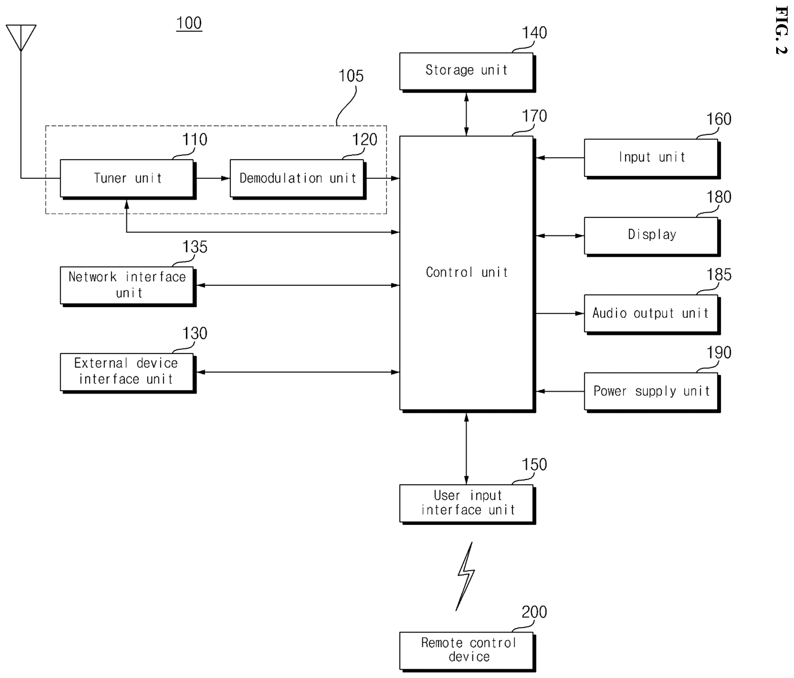

FIG. 2 is an internal block diagram of an image display device of FIG. 1.

Referring to FIG. 2, the image display device 100 may include a broadcast receiving unit 105, an external device interface unit 130, a network interface unit 135, a storage unit 140, a user input interface unit 150, an input unit 160, a control unit 170, a display 180, an audio output unit 185, and/or a power supply unit 190.

The broadcast receiving unit 105 may include a tuner unit 110 and a demodulation unit 120.

Meanwhile, the image display device 100 is also possible to include only the broadcast receiving unit 105 and the external device interface unit 130 among the broadcast receiving unit 105, the external device interface unit 130, and the network interface unit 135. That is, the image display device 100 may not include the network interface unit 135.

The tuner unit 110 selects a broadcast signal corresponding to a channel selected by a user or all pre-stored channels among broadcast signals received through an antenna (not illustrated) or a cable (not illustrated). The tuner unit 110 may convert the selected broadcast signal into an intermediate frequency signal or a baseband image or a voice signal.

For example, the tuner unit 110 may convert the selected broadcast signal into a digital IF signal (DIF) when the selected broadcast signal is a digital broadcast signal, and convert the selected broadcast signal into an analog baseband image or voice signal (CVBS/SIF) when the selected broadcast signal is an analog broadcast signal. That is, the tuner unit 110 may process the digital broadcast signal or the analog broadcast signal. The analog baseband image or voice signal (CVBS/SIF) output from the tuner unit 110 may be directly input into the control unit 170.

Meanwhile, the tuner unit 110 may sequentially select broadcast signals of all broadcast channels stored through a channel memory function among received broadcast signals and convert the selected broadcast signals to the intermediate frequency signal or the baseband image or the voice signal.

Meanwhile, it is possible that the tuner unit 110 includes a plurality of tuners in order to receive a plurality of channels of broadcast signals. Alternatively, a single tuner receiving the plurality of channels of broadcast signals simultaneously is also possible.

The demodulation unit 120 may perform a demodulation operation by receiving the digital IF signal (DIF) converted by the tuner unit 110.

The demodulation unit 120 may perform demodulation and channel decoding, and then output a stream signal TS. In this case, the stream signal may be a signal in which an image signal, a voice signal, or a data signal is multiplexed.

The stream signal output from the demodulation unit 120 may be input into the control unit 170. The control unit 170 may perform demultiplexing, image/voice signal processing, etc., and then output the image to the display 180 and output a voice to the audio output unit 185.

The external device interface unit 130 may transmit or receive data with a connected external device. To this end, the external device interface unit 130 may include an A/V input/output unit (not illustrated).

The external device interface unit 130 may be connected to external devices such as a digital versatile disk (DVD), a Blu ray, a game machine, a camera, a camcorder, a computer (laptop), a set-top box, etc., by wire/wirelessly, and may perform an input/output operation with the external device.

Furthermore, the external device interface unit 130 may establish a communication network with various remote control devices 200 illustrated in FIG. 1 to receive a control signal related to the operation of the image display device 100 from the remote control device 200 or to transmit data related to the operation of the image display device 100 to the remote control device 200.

The A/V input/output unit may receive the image and voice signals of the external device. For example, the A/V input/output unit may include an Ethernet terminal, a USB terminal, a Composite Video Banking Sync (CVBS) terminal, a component terminal, an S-video terminal (analog), a Digital Visual Interface (DVI) terminal, a High Definition Multimedia Interface (HDMI) terminal, a Mobile High-definition Link (MHL) terminal, an RGB terminal, a D-SUB terminal, an IEEE 1394 terminal, an SPDIF terminal, a Liquid HD terminal, etc. Digital signals input through such terminals may be transferred to the control unit 170. In this case, analog signals input through the CVBS terminal and the S-video terminal may be converted into digital signals through an analog-to-digital converter (not illustrated) and transferred to the control unit 170.

The external device interface unit 130 may include a wireless communication unit (not illustrated) for short-range wireless communication with other electronic devices. The external device interface unit 130 may exchange data with a neighboring mobile terminal through the wireless communication unit. For example, the external device interface unit 130 may receive device information, executed application information, an application image, etc., from the mobile terminal in a mirroring mode.

The external device interface unit 130 may perform the short-range wireless communication using Bluetooth, Radio Frequency Identification (RFID), infrared Data Association (IrDA), Ultra-Wideband (UWB), ZigBee, etc.

The network interface unit 135 may provide an interface for connecting the image display device 100 to a wired/wireless network including an Internet network.

The network interface unit 135 may include a communication module (not illustrated) for connection to the wired/wireless network. For example, the network interface unit 135 may include a communication module for Wireless LAN (WLAN) (Wi-Fi), Wireless broadband (Wibro), World Interoperability for Microwave Access (Wimax), High Speed Downlink Packet Access (HSDPA), etc.

The network interface unit 135 may transmit or receive data to or from another user or another electronic device through a connected network or another network linked to the connected network.

The network interface unit 135 may receive contents or data provided by a content provider or a network operator. That is, the network interface unit 135 may receive contents such as movies, advertisements, games, VODs, broadcast signals, etc., provided from the content provider or a network provider, and information related thereto through the network.

The network interface unit 135 may receive update information and an update file of firmware provided by the network operator, and transmit data to the Internet or content provider, or the network operator.

The network interface unit 135 may select and receive a desired application among applications opened to the air through the network.

The storage unit 140 may store a program for each signal processing or control in the control unit 170, and may store a signal-processed image, voice, or data signal. For example, the storage unit 140 may store application programs designed for a purpose of performing various tasks which are enabled to be processed by the control unit 170, and selectively provide some of the stored application programs upon a request by the control unit 170.

Programs stored in the storage unit 140 are not particularly limited as long as they may be executed by the control unit 170.

The storage unit 140 may perform a function for temporarily storing an image, voice, or data signal received from the external device through the external device interface unit 130.

The storage unit 140 may store information on a predetermined channel through a channel memory function such as a channel map, etc.

An embodiment is illustrated in which the storage unit 140 of FIG. 2 is provided separately from the control unit 170, but a scope of the present disclosure is not limited thereto, and the storage unit 140 may be included within the control unit 170.

The storage unit 140 may include at least one of a volatile memory (e.g., DRAM, SRAM, SDRAM, etc.) or a non-volatile memory (e.g., a flash memory, a hard disk drive (HDD), a solid-state drive (SSD), etc.). In various embodiments of the present disclosure, the storage unit 140 and the memory may be used interchangeably.

The user input interface unit 150 may transfer a signal input by the user to the control unit 170 or transfer a signal from the control unit 170 to the user.

For example, the user input interface unit 150 may transmit/receive a user input signal such as power on/off, channel selection, screen setting, etc., to/from the remote control device 200, transfer a user input signal from a local key (not illustrated) such as a power key, a channel key, a volume key, a setting key, etc., to the control unit 170, transfer a user input signal input from a sensor unit (not illustrated) sensing a gesture of the user to the control unit 170, or transmit the signal from the control unit 170 to the sensor unit.

The input unit 160 may be provided on one side of a main body of the image display device 100. For example, the input unit 160 may include a touch pad, a physical button, etc.

The input unit 160 may receive various user instructions related to the operation of the image display device 100, and may transfer a control signal corresponding to the input instruction to the control unit 170.

The input unit 160 may include at least one microphone (not illustrated) and receive a voice of the user through the microphone.

The control unit 170 may include at least one processor, and control an overall operation of the image display device 100 by using the processor included therein. Here, the processor may be a general processor such as a central processor (CPU). Of course, the processor may be a dedicated device such as an ASIC or another hardware based processor.

The control unit 170 demultiplexes a stream input through the tuner 110, the demodulation unit 120, the external device interface unit 130, or the network Interface unit 135, or processes demultiplexed signals to generate and output a signal for image or voice output.

The display 180 converts an image signal, a data signal, an OSD signal, and a control signal processed by the control unit 170 or an image signal, a data signal, a control signal, etc., received by the external device interface unit 130 to generate a driving signal.

The display 180 may include a display panel (not illustrated) having a plurality of pixels.

The plurality of pixels provided in the display panel may include RGB sub-pixels. Alternatively, the plurality of pixels provided in the display panel may include RGBW sub-pixels. The display 180 converts the image signal, the data signal, the OSD signal, the control signal, etc., processed by the control unit 170 to generate driving signals for the plurality of pixels.

The display 180 is possible to be a Plasma Display Panel (PDP), a Liquid Crystal Display (LCD), an Organic Light Emitting Diode (OLED), a flexible display, etc., and may be possible to be a 3D display. The 3D display 180 may be classified into a glasses-free type and a glasses type.

Meanwhile, it is also possible that the display 180 is configured as a touch screen, and used as an input device in addition to an output device.

The audio output unit 185 receives a signal voice-processed by the control unit 170, and outputs the signal as the voice.

An image signal image-processed by the control unit 170 may be input into the display 180, and display the signal as an image corresponding to the image signal. Further, the image signal image-processed by the control unit 170 may be input into an external output device through the external device interface unit 130.

The voice signal processed by the control unit 170 may be audio-output to the audio output unit 185. In addition, the voice signal processed by the control unit 170 may be input into the external output device through the external device interface unit 130.

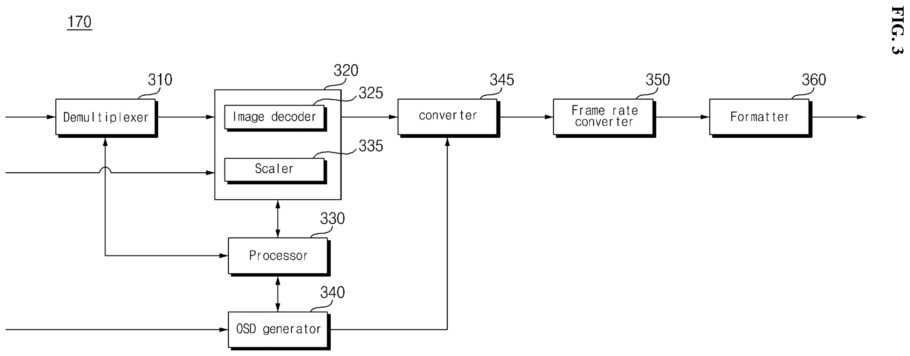

Although not illustrated in FIG. 2, the control unit 170 may include a demultiplexer, an image processor, etc. This will be described below with reference to FIG. 3.

Besides, the control unit 170 may control an overall operation in the image display device 100. For example, the control unit 170 may control the tuner unit 110 to tune a broadcast corresponding to a channel selected by the user or a pre-stored channel.

Further, the control unit 170 may control the image display device 100 by a user instruction or an internal program input through the user input interface unit 150.

Meanwhile, the control unit 170 may control the display 180 to display an image. In this case, the image displayed in the display 180 may be a still image or a moving picture, and may be a 2D image or a 3D image.

Meanwhile, the control unit 170 may cause a predetermined 2D object to be displayed within the image displayed on the display 180. For example, the object may be at least one of a connected web screen (newspaper, magazine, etc.), an Electronic Program Guide (EPG), various menus, widgets, icons, the still image, the moving picture, and a text.

Meanwhile, the image display device 100 may further include a photographing unit (not illustrated). The photographing unit may photograph a user. It is possible that the photographing unit is implemented as one camera, but is not limited thereto, and it is also possible that the photographing unit is implemented as a plurality of cameras. Meanwhile, the photographing unit may be embedded in the image display device 100 above the display 180 or may be disposed separately. Image information photographed by the photographing unit may be input into the control unit 170.

The control unit 170 may recognize a position of the user based on the image photographed by the photographing unit. For example, the control unit 170 may determine a distance (z-axis coordinate) between the user and the image display device 100. Besides, the control unit 170 may determine an x-axis coordinate and a y-axis coordinate in the display 180, which correspond to the position of the user.

The control unit 170 may detect the gesture of the user based on each of the image photographed by the photographing unit or the signal sensed by the sensor unit or a combination thereof.

The power supply unit 190 may supply the power throughout the image display device 100. In particular, the power supply unit 190 may supply power to the control unit 170 which may be implemented as a form of a system on chip (SOC), the display 180 for displaying the image, and the audio output unit 185 for outputting an audio.

Specifically, the power supply unit 190 may include a converter (not illustrated) converting alternating current (AC) power into direct current (DC) power, and a DC/DC converter converting a level of the DC power.

The remote control device 200 may transmit a user input to the user input interface unit 150. To this end, the remote control device 200 may use Bluetooth, radio frequency (RF) communication, Infrared Radiation communication, Ultra Wideband (UWB), a ZigBee scheme, etc. Further, the remote control device 200 may receive an image, voice or data signal output by the user input interface unit 150, and display or voice-output the image, voice, or data signal to the remote control device 200.

Meanwhile, the image display device 100 may be a fixed or mobile digital broadcast receivable digital broadcast receiver.

Meanwhile, the block diagram of the display device 100 illustrated in FIG. 2 is just a block diagram for an embodiment of the present disclosure, and each component of the block diagram may be integrated, added, or omitted depending on a specification of an actually implemented image display device 100.

That is, two or more components may be combined into one component or one component may be divided into two or more components as necessary. Further, a function performed in each block is for describing the embodiment of the present disclosure, and specific operations or devices thereof do not limit the scope of rights of the present disclosure.

FIG. 3 is an internal block diagram of a control unit of FIG. 2.

Referring to FIG. 3, the control unit 170 according to an embodiment of the present disclosure may include a demultiplexer 310, an image processor 320, a processor 330, an OSD generator 340, a mixer 345, a frame rate converter 350, and/or a formatter 360. In addition, the control unit may further include an audio processor (not illustrated) and a data processor (not illustrated).

The demultiplexer 310 demultiplexes an input stream. For example, when MPEG-2 TS is input, the MPEG-2 TS may be demultiplexed, and separated into each of an image signal, a voice signal, and a data signal. Here, the stream signal input into the demultiplexer 310 may be a stream signal output from the tuner unit 110, the demodulation unit 120, or the external device interface unit 130.

The image processor 320 may perform image processing of the demultiplexed image signal. To this end, the image processor 320 may include an image decoder 325 and a scaler 335.

The image decoder 325 may decode the demultiplexed image signal, and the scaler 335 may perform scaling to enable the display 180 to output a resolution of the decoded image signal.

The image decoder 325 may include various specifications of decoders. For example, the image decoder 325 may include an MPEG-2 decoder, an H.264 decoder, a 3D image decoder for a color image and a depth image, a decoder for a multi-viewpoint image, etc.

The processor 330 may control an overall operation in the image display device 100 or in the control unit 170. For example, the processor 330 may control the tuner 110 to tune a broadcast corresponding to a channel selected by the user or a pre-stored channel.

Further, the processor 330 may control the image display apparatus 100 by a user instruction input through the user input interface unit 150 or by an internal program.

Further, the processor 330 may perform data transmission control with the network interface unit 135 or the external device interface unit 130.

Further, the processor 330 may control operations of the demultiplexer 310, the image processor 320, the OSD generator 340, etc., in the control unit 170.

The OSD generator 340 may generate an OSD signal according to a user input or autonomously. For example, based on a user input signal input through the input unit 160, the OSD generator 340 may generate a signal for displaying various information on the screen of the display 180 in a graphic or text form.

The generated OSD signal may include various data including a user interface screen, various menu screens, widgets, icons, etc., of the image display device 100. Further, the generated OSD signal may include a 2D object or a 3D object.

Further, the OSD generator 340 may generate a pointer displayable in the display 180 based on a pointing signal input from the remote control device 200.

The OSD generator 340 may include a pointing signal processor (not illustrated) that generates the pointer. It is also possible that the pointing signal processor (not illustrated) is not provided in the OSD generator 240, but is separately provided.

The mixer 345 may mix the OSD signal generated by the OSD generator 340 and the decoded image signal image-processed by the image processor 320. The mixed image signal may be provided to the frame rate converter 350.

The frame rate converter (FRC) 350 may convert a frame rate of an input image. Meanwhile, it is also possible that the frame rate converter 350 outputs the frame rate as it is without separate frame rate conversion.

The formatter 360 may arrange a left-eye image frame and a right-eye image frame of the frame-rate-converted 3D image. In addition, the formatter 360 may output a synchronization signal Vsync for opening of a left-eye glass and a right-eye glass of a 3D viewing device (not illustrated).

Meanwhile, the formatter 360 may change a format of an input image signal to an image signal for display on the display 180 and output the image signal.

In addition, the formatter 360 may change a format of a 3D image signal. For example, the formatter 360 may change the format of the 3D image signal to any one format of various 3D formats including a side by side format, a top/down format, a frame sequential format, an interlaced format, a checker box format, etc.

Meanwhile, the formatter 360 may also convert a 2D image signal into the 3D image signal. For example, according to a 3D image generation algorithm, an edge or a selectable object may be detected within the 2D image signal, and an object or a selectable object according to the detected edge may be separated to generate the 3D image signal. In this case, the generated 3D mage signal may, as described above, be separated into a left-eye image signal L and a right-eye image signal R, and aligned.

Meanwhile, although not illustrated in the drawing, it is also possible that a 3D processor (not illustrated) for 3-dimensional effect signal processing may be further disposed after the formatter 360. Such a 3D processor may process brightness, tint, and color adjustment of the image signal for improvement of a 3D effect. For example, the 3D processor may perform signal processing to make a short range sharp and a long range blurred. Meanwhile, a function of such a 3D processor may be merged into the formatter 360 or merged within the image processor 320.

Meanwhile, the audio processor (not illustrated) in the control unit 170 may perform voice-processing of the demultiplexed voice signal. To this end, the audio processor (not illustrated) may include various decoders.

Further, the audio processor (not illustrated) in the control unit 170 may process a base, a treble, volume control, etc.

The data processor (not illustrated) in the control unit 170 may perform data processing of the demultiplexed data signal. For example, when the demultiplexed data signal is an encoded data signal, the data processor may decode the encoded data signal. The encoded data signal may be electronic program guide information including broadcast information such as a start time, an end time, etc., of a broadcast program broadcasted in each channel.

Meanwhile, the block diagram of the control unit 170 illustrated in FIG. 3 is just a block diagram for an embodiment of the present disclosure, and each component of the block diagram may be integrated, added, or omitted depending on a specification of an actually implemented control unit 170.

In particular, the frame rate converter 350 and the formatter 360 may not be provided within the control unit 170, but may be each provided separately or may be provided separately as a single module.

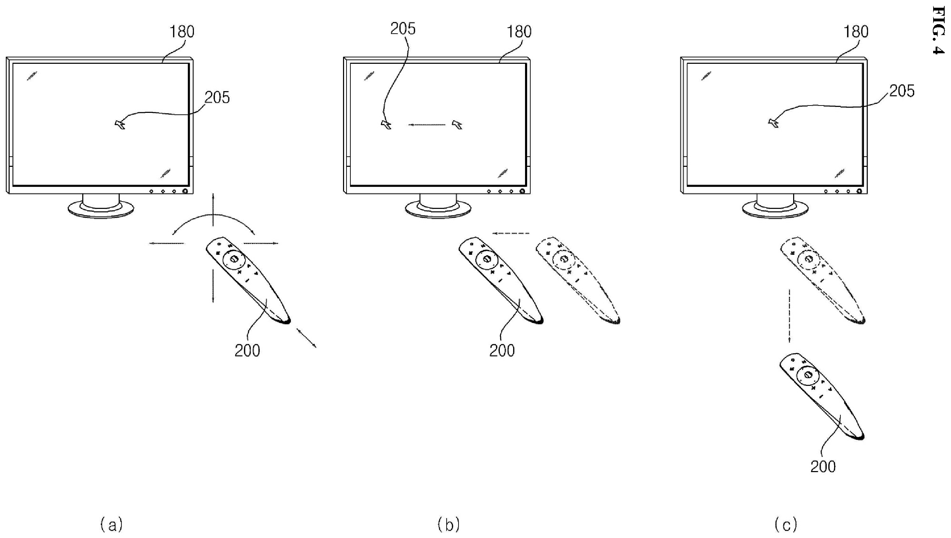

FIG. 4 is a diagram illustrating a control method of a remote control device of FIG. 2.

Referring to FIG. 4, it may be confirmed that a pointer 205 corresponding to the remote control device 200 is displayed in the display 180 of the image display device 100.

Referring to (a) of FIG. 4, a user may move the remote control device 200 up and down, left and right, or back and forth, or rotate the remote control device 200. In this case, the pointer 205 displayed in the display 180 of the image display device 100 may be displayed to correspond to the movement of the remote control device 200. The remote control device 200 may be referred to as a space remote controller or a 3D pointing device because the pointer 205 is moved and displayed according to a movement in a 3D space as illustrated in the drawing.

Referring to (b) of FIG. 4, it may be confirmed that when the user moves the remote control device 200 to the left, the pointer 205 displayed in the display 180 of the image display device 100 also moves to the left in response to the movement of the remote control device 200.

Information on the movement of the remote control device 200 sensed through the sensor of the remote control device 200 may be transmitted to the image display device 100. The image display device 100 may calculate coordinates of the pointer 205 from the information on the movement of the remote control device 200. The image display device 100 may display the pointer 205 to correspond to the calculated coordinates.

Referring to (c) of FIG. 4, in a state of pressing a specific button in the remote control device 200, the user may move the remote control device 200 to be far away from the display 180. Therefore, a selection area in the display 180 corresponding to the pointer 205 may be zoomed in, and enlarged and displayed. Contrary to this, when the user moves the remote control device 200 to be close to the display 180 in the state of pressing the specific button provided in the remote control device 200, the selection area in the display 180 corresponding to the pointer 205 may be zoomed out, and reduced and displayed.

Meanwhile, when the remote control device 200 is far away from the display 180, the selection area may be zoomed out and when the remote control device 200 is close to the display 180, the selection area may also be zoomed in.

Meanwhile, in the state in which the user presses the specific button in the remote control device 200, recognition of up and down, and left and right movement may be excluded. That is, when the remote control device 200 moves to be far away from or close to the display 180, the up and down, and left and right movement may not be recognized, and only back and forth movement may be recognized. In a state in which the user does not press the specific button in the remote control device 200, only the up and down, and left and right movement of the remote control device 200 may be recognized, and as a result, only the pointer 205 may move.

Meanwhile, a movement speed or movement direction of the pointer 205 may correspond to the movement speed or movement direction of the remote control device 200.

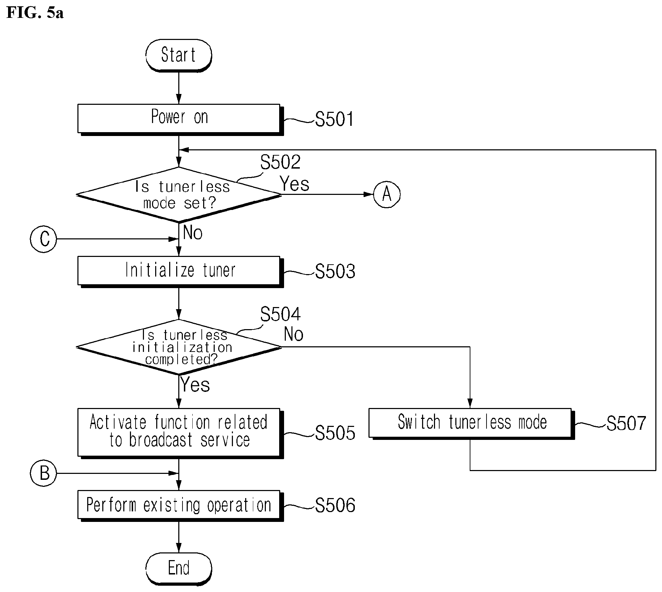

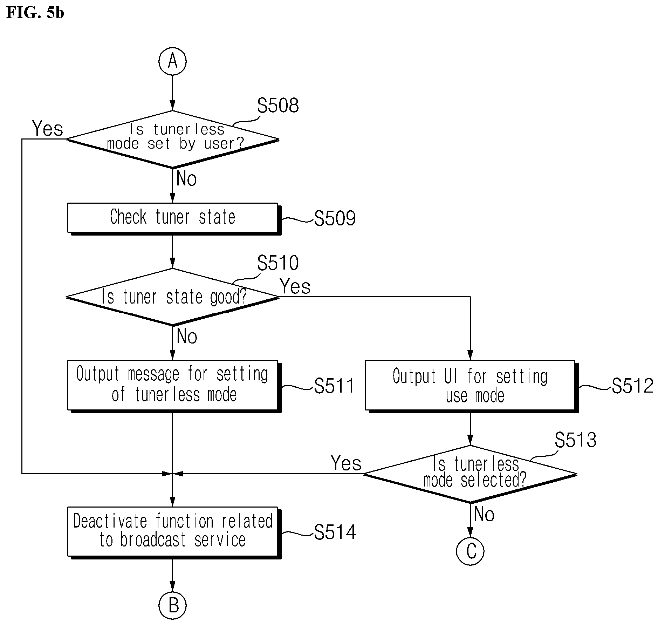

FIGS. 5a and 5b are flowcharts for an operating method of an image display device according to an embodiment of the present disclosure.

Referring to FIG. 5a, the image display device 100 may turn power on in operation S501. For example, the image display device 100 may turn power on when a user input of pressing a power key included in the input unit 160 is received in a state in which the image display device 100 is powered off, or when a signal of turning power on is received from the remote control device 200. When the video display device 100 is powered on, booting of the image display device 100 may be initiated.

According to an embodiment, when the power of the image display device 100 is first turned on and the booting of the image display device 100 is performed for the first time, the image display device 100 may set a mode related to the use of the tuner (hereinafter, referred to as use mode). Hereinafter, a mode that uses the tuner may be named tuner mode, and a mode that limits the use of the tuner may be named tunerless mode.

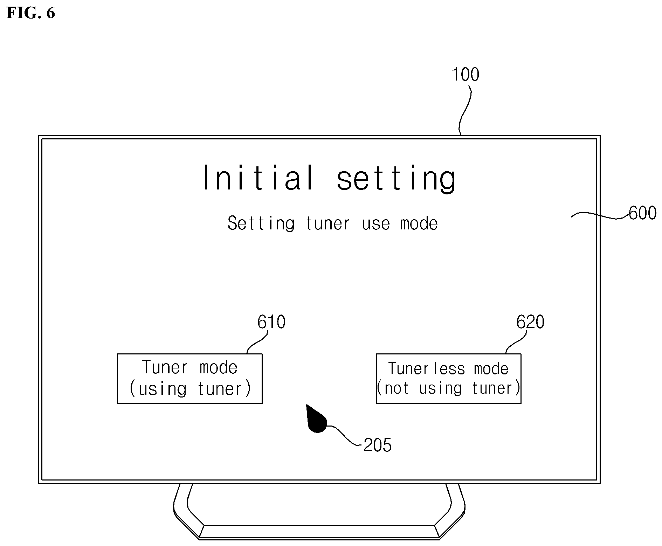

Referring to FIG. 6, the image display device 100 may output a screen 600 including a user interface related to initial setting of the use mode when the power of the image display device 100 is first turned on. The screen 600 may include an object 610 corresponding to the tuner mode and an object 620 corresponding to the tunerless mode. In this case, based on an object which the pointer 205 corresponding to the remote control device 200 points, the user may select one of the tuner mode and the tunerless mode as the use mode. The control unit 170 of the image display device 100 may receive an instruction of selecting one of the tuner mode and the tunerless mode as the use mode through the user input interface unit 150.

The image display device 100 may, in operation S502, check whether the use mode is set to the mode that limits the use of the tuner. For example, the image display device 100 may confirm the use mode based on a data value for the use mode stored in the memory 140.

The image display device 100 may, in operation S503, perform initialization of the tuner when the use mode is set to the tuner mode. For example, the control unit 170 of the image display device 100 may transmit a signal of instructing the initialization of the tuner to the tuner unit 110. In this case, the tuner unit 110 may, based on the signal received from the control unit 170, set data stored in a register of the tuner to a value for driving a radio frequency integrated circuit (RFIC) or initialize the data to an initial setting value. Meanwhile, the tuner unit 110 may transmit a response signal (e.g., ack signal) to the initialization to the control unit 170 when the initialization of the tuner is completed.

The image display device 100 may, in operation S504, determine whether the initialization of the tuner is completed. For example, the control unit 170 of the image display device 100 may determine whether the initialization of the tuner is completed based on whether the response signal to the initialization being received from the tuner unit 110.

The image display device 100 may, in operation S505, activate a function related to a broadcast service based on completion of the initialization of the tuner. For example, the image display device 100 may activate the use of a function of outputting a broadcast image, a function of searching for a channel, a function of providing an electronic program guide (EPG), a function of recording a scheduled broadcast image, etc., based on completion of the initialization of the tuner.

The image display device 100 may, in operation S506, perform an existing operation according to the power being turned on. For example, the image display device 100 may output, through the display 180, a home screen which is a basic screen output upon completion of the booting of the image display device 100. For example, the image display device 100 may be connected to a wired/wireless network including an Internet network through the network interface unit 135.

Meanwhile, the image display device 100 may, in operation S507, switch the use mode to the tunerless mode based on failure to initialize the tuner. For example, the control unit 170 of the image display device 100 may determine that initialization of the tuner fails based on no response signal to the initialization being received from the tuner unit 110. For example, the control unit 170 of the image display device 100 may determine that the initialization of the tuner fails based on a signal corresponding to the failure in the initialization being received from the tuner unit 110. Meanwhile, when the use mode is switched to the tunerless mode based on the failure in the initialization of the tuner, the image display device 100 may store a data value for the use mode stored in the memory 140 as a first value corresponding to automatic setting of the tunerless mode.

Meanwhile, referring to FIG. 5b, the image display device 100 may, in operation S508, determine whether the use mode is manually set to the tunerless mode by a user when the use mode is set to the tunerless mode. For example, the image display device 100 may determine that the use mode is automatically set to the tunerless mode when the data value for the use mode stored in the memory 140 is the first value, and that the use mode is manually set to the tunerless mode when the data value is a second value.

The image display device 100 may, in operation S509, check a state of the tuner when the operation mode is automatically set to the tunerless mode. For example, the control unit 170 of the image display device 100 may transmit a preset first signal for checking the state of the tuner to the tuner. In this case, the control unit 170 of the image display device 100 may determine the state of the tuner based on a second signal responding to the first signal from the tuner. That is, when the control unit 170 receives the second signal from the tuner, it may be determined that power is normally supplied to the tuner and a communication state of the tuner is also good.

According to an embodiment, the first signal for checking the state of the tuner may be a signal of instructing initialization of the tuner. The second signal responding to the first signal may be a response signal (e.g., an ack signal) to the initialization . That is, the image display device 100 may retry the initialization of the tuner in a state in which the use mode is automatically set to the tunerless mode.

The image display device (100) may, in operation S510, determine whether the state of the tuner is good. For example, the control unit 170 of the image display device 100 may determine that the state of the tuner is defective based on no second signal responding to the first signal being received from the tuner.

The image display device 100 may, in operation S511, output a message indicating that the use mode is set to the tunerless mode through the display 180 if the state of the tuner is defective. That is, the image display device 100 may notify the user that the use mode is set to the tunerless mode if the state of the tuner is determined to be defective in the state in which the use mode is automatically set to the tunerless mode.

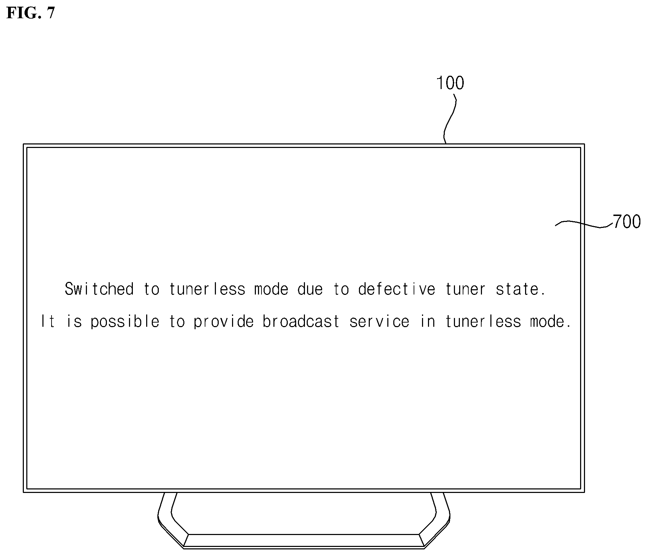

Referring to FIG. 7, the image display device 100 may, through the display 180, output a screen 700 including a message indicating that the use mode is set to the tunerless mode due to the state of the tuner being defective. The image display device 100 may also output a message indicating that the function related to the broadcast service is deactivated as the use mode is set to the tunerless mode.

Meanwhile, the image display device 100 may, in operation S512, output a user interface related to setting of the use mode through the display 180 when the state of the tuner is good. That is, when the state of the tuner is determined to be good in the state in which the use mode is automatically set to the tunerless mode, the image display device 100 may provide the user interface for the user to set the usage mode by considering failure in the initialization of the tuner.

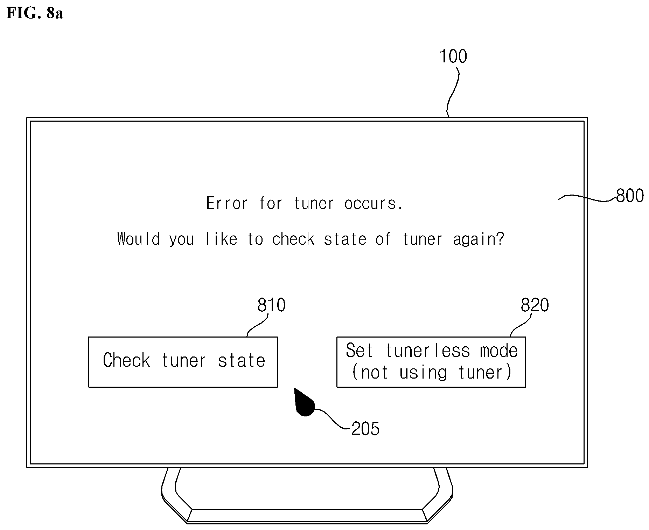

Referring to FIG. 8a, the image display device 100 may output a screen 800 including a user interface related to setting of the use mode according to the failure in the initialization for the tuner. The screen 800 may include a message indicating that the initialization of the tuner fails. The screen 800 may include an object 810 corresponding to state checking and an object 820 corresponding to the tunerless mode. In this case, based on the object to which the pointer 205 corresponding to the remote control device (200) points, the user may check the state of the tuner or tune the tunerless mode as the use mode. The control unit 170 of the image display device 100 may receive an instruction of checking the state of the tuner or an instruction of setting the use mode to the tunerless mode through the user input interface unit 150.

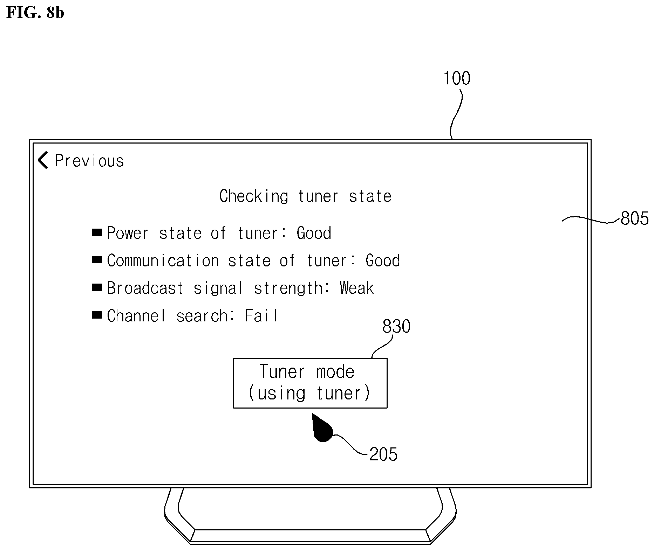

Referring to FIG. 8b, when the object 810 corresponding to the state checking of the tuner is selected by the user, the image display device 100 may output a screen 805 indicating the state of the tuner. The screen 805 indicating the state of the tuner may include messages regarding a power state of the tuner, a communication state of the tuner, an initialization state of the tuner, a state of the broadcast signal transmitted to the tuner, etc. For example, the image display device 100 may determine the power state and/or the communication state of the tuner based on a second signal responding to a first signal for checking the state of the tuner. For example, the image display device 100 may determine the state of the broadcast signal transferred to the tuner based on whether the broadcast signal being received through the tuner, whether a channel being is searched from the broadcast signal, etc.

Meanwhile, the screen 805 indicating the state of the tuner may include an object 830 corresponding to the tuner mode. When the user selects the object 830 corresponding to the tuner mode, the image display device 100 may store a data value for the use mode stored in the memory 140 as a value corresponding to the tuner mode. The image display device 100 may perform the initialization of the tuner again based on the use mode being set to the tuner mode.

The image display device 100 may, in operation S513, determine whether the user tunes the tunerless mode as the use mode through the user interface. Meanwhile, when the user selects the tunerless mode as the use mode, the image display device 100 may store the data value for the use mode stored in the memory 140 as a second value corresponding to manual setting of the tunerless mode.

The image display device 100 may, in operation S514, deactivate the function related to the broadcast service. For example, the image display device 100 may block the use of the function of outputting the broadcast image, the function of searching for the channel, the function of providing the electronic program guide (EPG), the function of recording the scheduled broadcast image, etc., when the use mode is manually set to the tunerless mode or when the state of the tuner is determined to be defective in the state in which the use mode is automatically set to the tunerless mode.

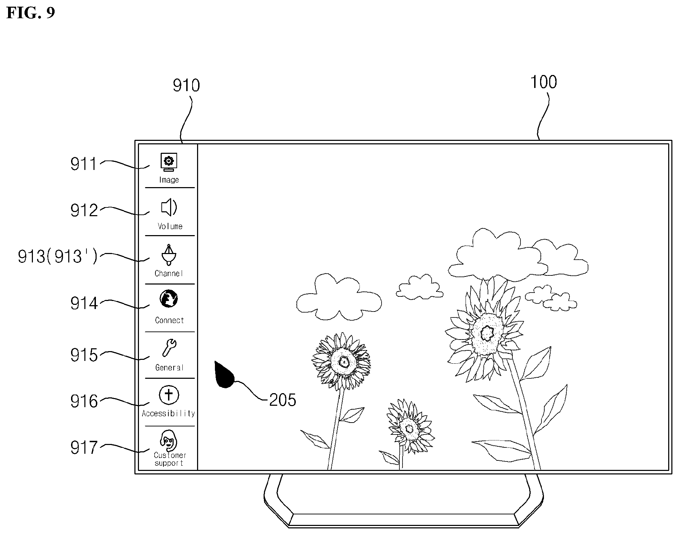

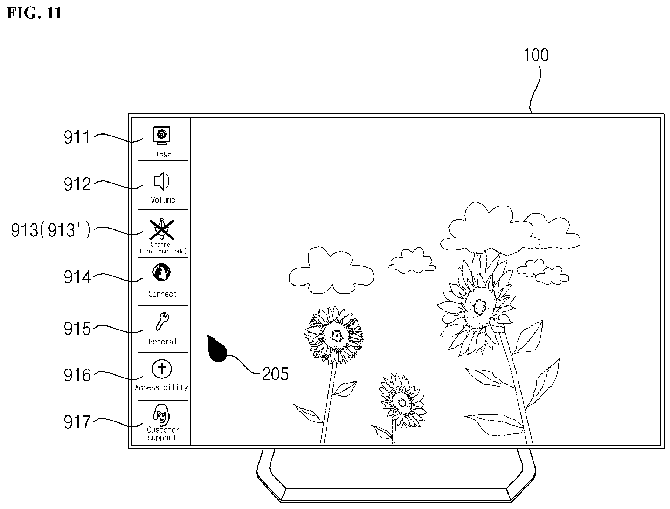

Referring to FIGS. 9 to 11, the user may set the use mode using a user interface 910 (hereinafter, referred to as setting UI) for setting a set value of the image display device 100 while using the image display device 100.

Referring to FIG. 9, the image display device 100 may provide the setting UI 910 in a state in which a screen is output through the display 180. For example, the image display device 100 may output the setting UI 910 when a user input signal of pressing a setting key is received from the remote control device 200.

The setting UI 910 may include an object 911 corresponding to settings related to image output, an object 912 corresponding to settings related to audio output, an object 913 corresponding to settings related to provision of the broadcast service, an object 914 corresponding to settings related to communication connection, an object 915 corresponding to basic settings of the image display device 100 such as language and time, an object 916 corresponding to settings related to convenience functions such as voice guidance and subtitle display, and an object 917 corresponding to settings related to technical support such as software update.

In a state in which the use mode is set to the tuner mode, the object 913 corresponding to the settings related to the provision of the broadcast service may be displayed as a first object 913' indicating activation of the function related to the broadcast service. In this case, when the user selects the first object 913' using the pointer 205 corresponding to the remote control device 200, the image display device 100 may provide the function of searching for the channel, a function of editing a searched channel, and the like.

Meanwhile, the user may set the use mode by selecting the object 915 corresponding to the basic settings of the image display device 100 using the pointer 205 corresponding to the remote control device 200.

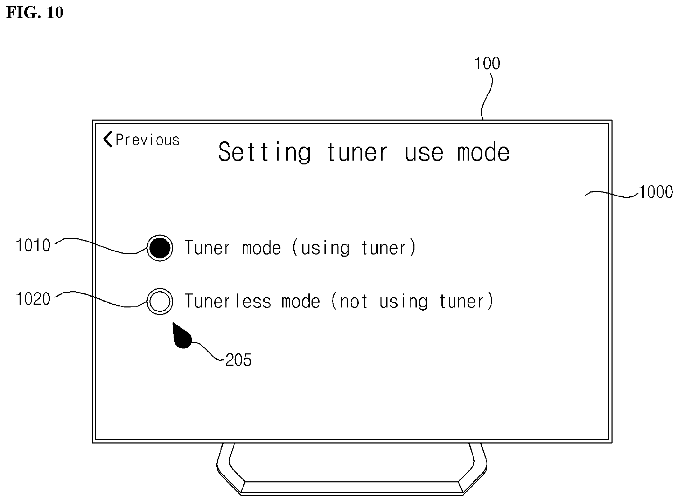

Referring to FIG. 10, the display device 100 may output a screen 1000 for setting the use mode though the display 180. The screen 1000 for setting the use mode may include an object 1010 corresponding to the tuner mode and an object 1020 corresponding to the tunerless mode. The user may select any one of the object 1010 corresponding to the tuner mode and the object 1020 corresponding to the tunerless mode using the pointer 205 corresponding to the remote control device 200. The image display device 100 may set the use mode to any one of the tuner mode and the tunerless mode based on the user's selection. In this case, when the user selects the tunerless mode as the use mode, the image display device 100 may store the data value for the use mode stored in the memory 140 as a second value corresponding to manual setting of the tunerless mode.

In the state in which the use mode is set to the tunerless mode, the object 913 corresponding to the settings related to the provision of the broadcast service may be displayed as a second object 913" indicating deactivation of the function related to the broadcast service. In this case, even if the user selects the second object 913" using the pointer 205 corresponding to the remote control device 200, the image display device 100 may be blocked from accessing the settings related to the provision of the broadcast service, such as the function of searching for the channel, the function of editing the searched channel, etc.

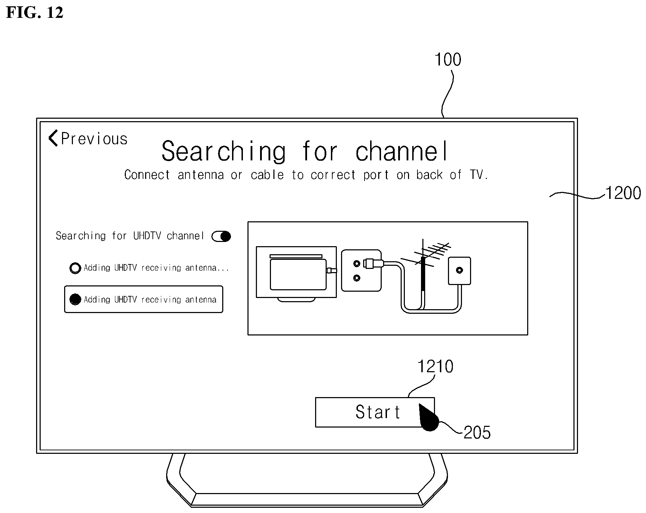

Referring to FIG. 12, the image display device 100 may output a channel search related screen 1200 based on a user input of selecting the object 913 corresponding to the settings related to the provision of the broadcast service. The image display device 100 may provide the function of searching for the channel in the state in which the function related to the broadcast service is activated. Hereinafter, the channel search may be referred to as auto scan, automatic scan, automatic channel tuning, automatic channel setting, automatic channel search, etc. The channel search related screen 1200 may include an object 1210 corresponding to initiation of the channel search. When the user selects the object 1210 corresponding to the initiation of the channel search using the pointer 205, the image display device 100 may perform the channel search based on the broadcast signal received through the tuner.

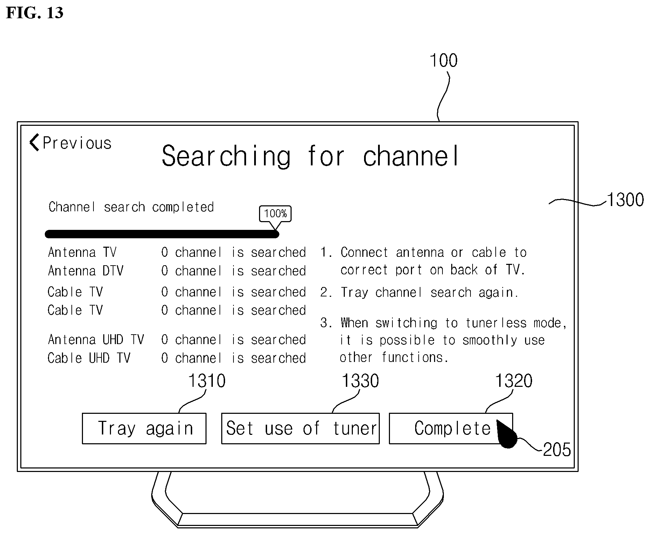

Referring to FIG. 13, the image display device 100 may output a search result screen 1300 for a result of performing the channel search. The search result screen 1300 may include a number of channels searched according to a scheme of receiving the broadcast signal, a number of channels searched according to a frequency band, etc. The search result screen 1300 may include an object 1310 corresponding to re-performance of the channel search and an object 1320 corresponding to completion of the channel search.

The image display device 100 may determine the state of the tuner according to the result of performing the channel search. For example, the image display device 100 may determine that the state of the tuner is defective when there is no channel searched through the channel search.

The image display device 100 may output a message indicating that the channel search fails to the search result screen 1300 when no channel is found through the channel search. The image display device 100 may provide the user interface related to the setting of the use mode through the search result screen 1300 when the state of the tuner is determined to be defective according to the result of performing the channel search. For example, the image display device 100 may include an object 1330 corresponding to the setting of the use mode in the search result screen 1300 when the state of the tuner is determined to be defective according to the result of performing the channel search. In this case, when the user selects the object 1330 corresponding to the setting of the use mode using the pointer 205, the image display device 100 may output a screen 1000 for setting the use mode (see FIG. 10).

As described above, according to various embodiments of the present disclosure, whether to activate the function related to the broadcast service may be determined according to a preset mode related to the use of the tuner during booting.

Further, according to various embodiments of the present disclosure, the mode related to the use of the tuner may be switched according to the state of the tuner.

Further, according to various embodiments of the present disclosure, a user interface for setting the mode related to the use of the tuner may be provided to the user.

In addition, according to various embodiments of the present disclosure, an optimized user interface may be provided to the user according to the setting of the mode related to the use of the tuner.

Referring to FIGS. 1 to 13, the image display device 100 according to an aspect of the present disclosure includes: a broadcast receiving unit 105 including a tuner for receiving a broadcast signal; a display 180; and a control unit 170 communicating with the tuner, and the control unit 170 may check a use mode related to the use of the tuner, based on power-on of the image display device 100, activate a function related to broadcast service based on the use mode being set to a first mode of using the tuner, and deactivate the function related to the broadcast service based on the use mode being set to a second mode of limiting the use of the tuner.

In addition, according to an aspect of the present disclosure, the control unit 170 may, when the use mode is set to the first mode, perform initialization of the tuner, and when a response signal is not received from the tuner, change the use mode to the second mode, and when the response signal to the initialization is received from the tuner, activate the function related to the broadcast service.

Further, according to an aspect of the present disclosure, the control unit 170 may, when the use mode is set to the second mode, check whether the use mode is manually set to the second mode by the user, when the use mode is automatically set to the second mode, transmit a first signal for checking the state of the tuner to the tuner, and when the use mode is manually set to the second mode, deactivate the function related to the broadcast service.

In addition, according to an aspect of the present disclosure, the control unit 170 may, based on a second signal received from the tuner in response to the first signal, determine the state of the tuner, when the state of the tuner is good, output the user interface related to the setting of the use mode through the display 180, and when the state of the tuner is defective, output a message indicating that the use mode is set to the second mode through the display 180.

Further, according to an aspect of the present disclosure, the first signal may be a signal of instructing the initialization of the tuner, and the second signal may be a response signal to the initialization.

In addition, according to an aspect of the present disclosure, the control unit 170 may perform a channel search based on the broadcast signal received through the tuner in the state in which the function related to the broadcast service is activated, and may output the user interface related to the setting of the use mode through the display 180 when it is determined that the state of the tuner is defective according to the result of performing the channel search.

In addition, according to an aspect of the present disclosure, the control unit 170 may output, through the display 180, a user interface including objects respectively corresponding to a plurality of functions of the image display device 100, and the user interface may include a first object corresponding to activation of the function related to the broadcast service when the use mode is set to a first mode, and may include a second object corresponding to deactivation of the function related to the broadcast service when the use mode is set to a second mode.

An operating method of an image display device 100 according to an aspect of the present disclosure may include: an operation of checking a use mode related to the use of a tuner for receiving a broadcast signal, based on power-on of the image display device 100; an operation of activating a function related to a broadcast service, based on the use mode being set to a first mode of using the tuner; and an operation of deactivating the function related to the broadcast service, based on the use mode being set to a second mode of limiting the use of the tuner.

In addition, according to an aspect of the present disclosure, the operating method may further include an operation of performing the initialization of the tuner when the use mode is set to the first mode, and an operation of changing the use mode to the second mode when the response signal is not received from the tuner, and the operation of activating the function related to the broadcast service may activate the broadcast service when the response signal to the initialization is received from the tuner.

Further, according to an aspect of the present disclosure, the operating method may further include an operation of checking whether the use mode is manually set to the second mode by the user when the use mode is set to the second mode; and an operation of transmitting a first signal for checking the state of the tuner to the tuner when the use mode is automatically set to the second mode, and the operation of deactivating the function related to the broadcast service may deactivate the function related to the broadcast service when the use mode is manually set to the second mode.

In addition, according to an aspect of the present disclosure, the operating method may further include an operation of determining the state of the tuner based on a second signal received from the tuner in response to the first signal; an operation of outputting the user interface related to setting of the use mode through a display 180 when the state of the tuner is good; and an operation of outputting a message indicating that the use mode is set to the second mode through the display 180 when the state of the tuner is defective.

Further, according to an aspect of the present disclosure, the first signal may be a signal of instructing the initialization for the tuner, and the second signal may be a response signal to the initialization.

In addition, according to an aspect of the present disclosure, the operating method may further include an operation of performing a channel search based on the broadcast signal received through the tuner in the state in which the function related to the broadcast signal is activated; and an operation of an outputting the user interface related to the setting of the use mode through the display 180 when it is determined that the state of the tuner is defective according to the result of performing the channel search.

In addition, according to an aspect of the present disclosure, the operating method may further include an operation of outputting, through the display 180, a user interface including objects respectively corresponding to a plurality of functions of the image display device 100, and the user interface may include a first object corresponding to activation of the function related to the broadcast service when the use mode is set to the first mode, and may include a second object corresponding to deactivation of the function related to the broadcast service when the use mode is set to the second mode.

It is to be understood that the accompanying drawings are just used for easily understanding the embodiments disclosed in the present disclosure and a technical spirit disclosed in the present disclosure is not limited by the accompanying drawings and all changes, equivalents, or substitutes included in the spirit and the technical scope of the present disclosure are included.

Meanwhile, the operating method of the present disclosure may be implemented as a processor readable code in a processor readable recording medium. The processor readable recording medium includes all kinds of recording devices storing data which may be deciphered by a processor. Examples of the processor readable recording medium include a ROM, a RAM, a CD-ROM, a magnetic tape, a floppy disk, an optical data storage device, and the like and further include a device implemented as a type of a carrier wave such as transmission through the Internet. Further, the processor readable recording media may be stored and executed as codes which may be distributed in the computer system connected through a network and read by the processor in a distribution method.

Further, while the embodiments of the present disclosure have been illustrated and described above, the present disclosure is not limited to the aforementioned specific embodiments, various modifications may be made by a person with ordinary skill in the technical field to which the present disclosure pertains without departing from the subject matters of the present disclosure that are claimed in the claims, and these modifications should not be appreciated individually from the technical spirit or prospect of the present disclosure.

## Claims

1. An image display device comprising:
a broadcast receiving unit including a tuner for receiving a broadcast signal;
a display; and
a control unit communicating with the tuner,
wherein the control unit
checks a use mode related to the use of the tuner based on power-on of the image display device,
activates a function related to a broadcast service based on the use mode being set to a first mode of using the tuner, and
deactivates the function related to the broadcast service based on the use mode being set to a second mode of limiting the use of the tuner.

2. The image display device of claim 1, wherein the control unit
performs initialization of the tuner when the use mode is set to the first mode,
changes the use mode to the second mode when the response signal is not received from the tuner, and
activates the function related to the broadcast service when the response signal to the initialization is received from the tuner.

3. The image display device of claim 1, wherein the control unit
checks whether the use mode is manually set to the second mode by a user when the use mode is set to the second mode,
transmits a first signal for checking a state of the tuner to the tuner when the use mode is automatically set to the second mode, and
deactivates the function related to the broadcast service when the use mode is manually set to the second mode.

4. The image display device of claim 3, wherein the control unit
determines the state of the tuner based on a second signal received from the tuner in response to the first signal,
outputs a user interface related to setting of the use mode through the display when the state of the tuner is good, and
outputs a message indicating that the use mode is set to the second mode through the display when the state of the tuner is defective.

5. The image display device of claim 4, wherein the first signal is a signal of instructing the initialization for the tuner, and
the second signal is the response signal to the initialization.

6. The image display device of claim 1, wherein the control unit
performs a channel search based on the broadcast signal received through the tuner in a state in which the function related to the broadcast service is activated, and
outputs the user interface related to the setting of the use mode through the display when it is determined that the state of the tuner is defective according to a result of performing the channel search.

7. The image display device of claim 1, wherein the control unit
outputs a user interface including objects corresponding to a plurality of functions of the image display device, respectively through the display, and
the user interface includes
includes a fist object corresponding to the activation of the function related to the broadcast service when the use mode is set to the first mode, and
includes a second object corresponding to the deactivation of the function related to the broadcast service when the use mode is set to the second mode.

8. An operating method of an image display device, comprising:
an operation of checking a use mode related to the use of a tuner for receiving a broadcast signal based on power-on of the image display device;
an operation of activating a function related to the broadcast service based on the use mode being set to a first mode of using the tuner; and
an operation of deactivating the function related to the broadcast service based on the use mode being set to a second mode of limiting the use of the tuner.

9. The operating method of an image display device of claim 8, further comprising:
an operation of performs initialization for the tuner when the use mode is set to the first mode; and
an operation of changing the use mode to the second mode when the response signal is not received from the tuner,
wherein in the operation of activating the function related to the broadcast service, the function related to the broadcast service is activated when a response signal to the initialization is received from the tuner.

10. The operating method of an image display device of claim 8, further comprising:
an operation of checking whether the use mode is manually set to the second mode by a user when the use mode is set to the second mode; and
an operation of transmitting a first signal for checking a state of the tuner to the tuner when the use mode is automatically set to the second mode,
wherein in the operation of deactivating the function related to the broadcast service, the function related to the broadcast service is deactivated when the use mode is manually set to the second mode.

11. The operating method of an image display device of claim 10, further comprising:
an operation of determining the state of the tuner based on a second signal received from the tuner in response to the first signal;
an operation of outputting a user interface related to setting of the use mode through a display when the state of the tuner is good; and
an operation of outputting a message indicating that the use mode is set to the second mode through the display when the state of the tuner is defective.

12. The operating method of an image display device of claim 11, wherein the first signal is a signal of instructing the initialization for the tuner, and
the second signal is the response signal to the initialization.

13. The operating method of an image display device of claim 8, further comprising:
an operation of performing a channel search based on the broadcast signal received through the tuner in a state in which the function related to the broadcast service is activated; and
an operation of outputting the user interface related to the setting of the use mode through the display when it is determined that the state of the tuner is defective according to a result of performing the channel search.

14. The operating method of an image display device of claim 8, further comprising:
an operation of outputting a user interface including objects corresponding to a plurality of functions of the image display device, respectively through the display,
wherein the user interface includes
includes a fist object corresponding to the activation of the function related to the broadcast service when the use mode is set to the first mode, and
includes a second object corresponding to the deactivation of the function related to the broadcast service when the use mode is set to the second mode.
